# EUROPEAN PATENT APPLICATION

(11) **EP 3 486 011 A1**
(43) Date of publication of application: **22.05.2019**
(21) Application number: 18179724.2
(22) Date of filing: 26.06.2018
(51) Int. Cl.: B23B 51/04

(54) **HOLE SAW AND COMPONENT THEREOF**

(30) Priority: 21.11.2017 TW 106140286
(71) Applicant: K&W Tools Co., Ltd., Nantou City, Nantou County 540 (TW)
(72) Inventor: HO, Kung-Jung, 540 Nantou (TW)
(74) Representative: Schwerbrock, Florian

(57) **Abstract**

A hole saw component (1) detachably combinable with a saw blade (30) comprises an arbor assembly (10) and a holder (20). The arbor assembly (10) comprises a collar (11), a shank part (12), a movable member (13) and at least one drive pin (14). The shank part (12) is connected with the collar (11) and comprises a plurality of positioning grooves (121, 122, 123). The movable member (13) is sleeved on the shank part (12) and is movable between different positioning grooves (121, 122, 123) relative to the shank part (12). The drive pin (14) is connected with and moved with the movable member (13). The holder (20) forms a detachable engagement structure with the collar (11). When the movable member (13) moves to different positioning grooves (121, 122, 123) relative to the shank part (12), a combination status of the holder (20) and/or the saw blade (30) is changeable by moving the drive pin (14) with the movable member (13), such that the arbor assembly (10) or/and the saw blade (30) is separable from or combinable with the holder (20).

## Description

### BACKGROUND

### 1. Field of the Invention

The present disclosure generally relates to a hole saw and a component thereof, and more particularly to a hole saw capable of facilitating assembly and disassembly and a component thereof.

### 2. Description of Related Art

A hole saw is generally used for sawing a circular hole having a fixed inner diameter on a plate-like object (such as a board, a plastic plate, or a metallic plate), so as to facilitate the arrangement of a corresponding component on the hole or be a passage for passing through other components. One end of the hole saw is combined with a power rotary tool. The hole saw is driven to rotate at a high speed to saw the plate-like object by serrated teeth disposed at the other end of the hole saw. Since the serrated teeth and other components of the hole saw are gradually worn out after the sawing operation, the worn components must be replaced in time to maintain the accuracy, stability, and safety of the sawing operation. However, different components of the conventional hole saws are mostly combined by screwing, such that the processes of replacing the components are complicated and the costs of operation and time are increased.

Accordingly, there is a need for providing a hole saw and a component thereof for easy operation by users.

### SUMMARY

An object of this disclosure is to provide a hole saw component capable of facilitating assembly or disassembly.

To achieve the aforesaid and other objects, a hole saw component of this disclosure comprises an arbor assembly and a holder. The arbor assembly comprises a collar, a shank part, a movable member and at least one drive pin. The collar comprises at least one aperture and a combination portion, and the aperture is located at a periphery of the combination portion. The shank part is connected with the collar and comprises a first positioning groove and a second positioning groove. The movable member is sleeved on the shank part and is movable between the first positioning groove and the second positioning groove relative to the shank part. The drive pin is connected with the movable member and inserted into at least a part of the aperture. The holder comprises a base and a corresponding combination portion. The base comprises a first surface, a second surface opposite to the first surface, and at least one through hole. The corresponding combination portion is configured on the first surface for forming a detachable engagement structure with the combination portion, and the through hole is insertable by the drive pin. The second surface is connectable with the saw blade. Wherein when the movable member is at the first positioning groove, the drive pin is inserted into and not through the aperture, such that the combination portion of the arbor assembly is separable from the corresponding combination portion of the holder; and wherein when the movable member is at the second positioning groove, the drive pin is inserted through the aperture and the through hole and beyond the second surface, such that the arbor assembly is combinable with the holder.

In one embodiment of this disclosure, the combination portion is a recess and the corresponding combination portion is a columnar structure. The combination portion comprises at least one positioning pin protruded from a lateral wall of the recess, and the corresponding combination portion comprises at least one slidable positioning groove configured on an outer wall of the columnar structure, such that the combination portion and the corresponding combination portion are combined with each other when each positioning pin slides into each slidable positioning groove.

In one embodiment of this disclosure, the slidable positioning groove comprises a first section and a second section. One end of the first section is an open end from which the positioning pin enters or is removed, the other end of the first section is communicated with one end of the second section, and the other end of the second section is a closed end.

In one embodiment of this disclosure, the first section is substantially perpendicular to the first surface, and the second section is substantially parallel to the first surface.

In one embodiment of this disclosure, the slidable positioning groove comprises at least one engagement recess engageable with the positioning pin.

In one embodiment of this disclosure, the collar further comprises at least one elastic member arranged corresponding to the positioning pin to form an elastic positioning structure.

In one embodiment of this disclosure, two symmetrical planar structures are formed at the outer wall of the columnar structure.

In one embodiment of this disclosure, the movable member further comprises a sleeving hole for sleeving the movable member on the shank part, and the sleeving hole is a non-circular hole corresponding to an outer contour of a cross-section of the shank part.

In one embodiment of this disclosure, the shank part further comprises a third positioning groove configured between the first positioning groove and the second positioning groove. Wherein when the movable member is at the third positioning groove, the drive pin is inserted through the aperture and into but not through the through hole so as to combine the arbor assembly with the holder, and the holder is connectable with or separable from the saw blade.

In one embodiment of this disclosure, the first positioning groove comprises a first bevel and a stopping plane, and the movable member is limited by the stopping plane to move only along the first bevel toward the collar. The second positioning groove comprises a second bevel, and the movable member is limited by the collar to move only along the second bevel away from the collar. The third positioning groove comprises two symmetrical third bevels, and the movable member is movable along each third bevel to the first positioning groove or the second positioning groove.

In one embodiment of this disclosure, the movable member comprises a resilient member disposed at one side of the movable member in contact with the shank part, such that the movable member is engaged with the resilient member when the movable member moves to one of the first positioning groove, the second positioning groove and the third positioning groove.

In one embodiment of this disclosure, the shank part further comprises an insertion space for inserting a drill bit.

In one embodiment of this disclosure, the shank part further comprises a fastener for fastening or unfastening the drill bit inserted into the insertion space.

In one embodiment of this disclosure, the holder further comprises a screw thread formed on the second surface for screwing the saw blade.

In one embodiment of this disclosure, the screw thread comprises a first thread section and a second thread section. Two sides of the first thread section are connected to the second surface and the second thread section respectively, and a diameter of the second thread section is less than a diameter of the first thread section.

In one embodiment of this disclosure, the holder further comprises an elastic ring sleeved on the screw thread for damping or regulating connection between the holder and the saw blade.

A hole saw of this disclosure comprises the aforesaid hole saw component and a saw blade. The saw blade is detachably connected to the second surface of the base. The saw blade comprises a back section and a lateral section connected to the back section. The back section comprises an axial hole and at least one opening, and the opening is insertable by the drive pin. The lateral section comprises serrated teeth. Wherein when the movable member is at the second positioning groove, the drive pin is inserted into the aperture, the through hole and the opening, such that the arbor assembly, the holder and the saw blade are combined with each other.

In one embodiment of this disclosure, the hole saw further comprises a drill bit combined with the hole saw component and passes through the axial hole of the saw blade. Wherein a diameter of the axial hole is greater than a diameter of the drill bit.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the descriptions, serve to explain the principles of the invention.
FIG. 1 illustrates use of a hole saw component of this disclosure;
FIG. 2 illustrates a cross-sectional view of the arbor assembly of the hole saw component of this disclosure;
FIG. 3 illustrates a view of a holder of the hole saw component of this disclosure;
FIG. 4 illustrates a partial view of another embodiment of the holder of the hole saw component of this disclosure;
FIGs. 5A-5B illustrate the movable member of the hole saw component of this disclosure at the first positioning groove;
FIGs. 6A-6C illustrate an operation view of combining the hole saw component of this disclosure with the arbor assembly and the holder;
FIG. 7 illustrates the movable member of the hole saw component of this disclosure at the second positioning groove;
FIGs. 8A-8B illustrate a view of a hole saw of this disclosure; and
FIG. 9 illustrates a view of combining the hole saw component of this disclosure with another embodiment of a saw blade.

### DETAILED DESCRIPTION OF THE EMBODIMENTS

Since various aspects and embodiments are merely exemplary and not limiting, after reading this specification, skilled artisans appreciate that other aspects and embodiments are possible without departing from the scope of the disclosure. Other features and benefits of any one or more of the embodiments will be apparent from the following detailed description and the claims.

The use of "a" or "an" is employed to describe elements and components described herein. This is done merely for convenience and to give a general sense of the scope of the disclosure. Accordingly, this description should be read to include one or at least one and the singular also includes the plural unless it is obvious that it is meant otherwise.

As used herein, the terms "first," "second," and the like are used for distinguishing between or referring identical or similar elements or structures and not necessarily for describing a sequential or chronological order thereof. It should be understood that the terms so used are interchangeable under appropriate circumstances or configurations.

As used herein, the terms "comprises," "comprising," "includes," "including," "has," "having" or any other variation thereof are intended to cover a non-exclusive inclusion. For example, a component, structure, article, or apparatus that comprises a list of elements is not necessarily limited to only those elements but may include other elements not expressly listed or inherent to such component, structure, article, or apparatus.

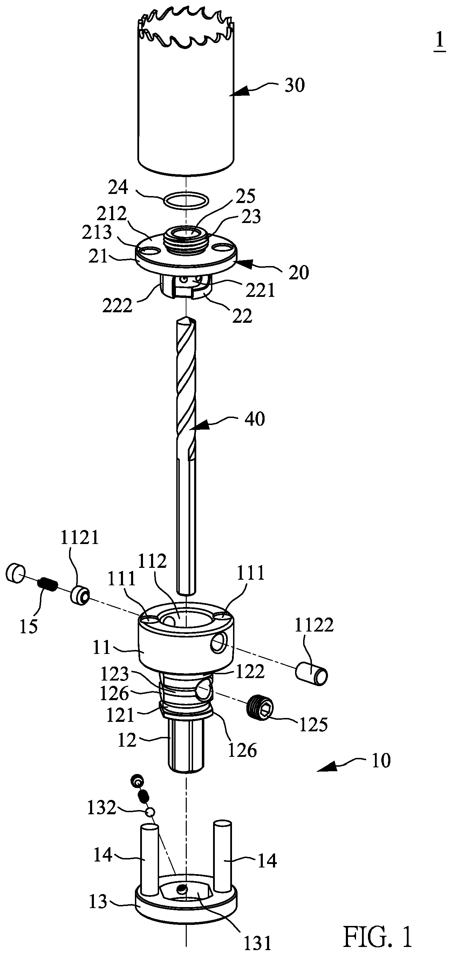

Refer to FIG. 1. As illustrated in FIG. 1, a hole saw component 1 of this disclosure comprises an arbor assembly 10 and a holder 20. The arbor assembly 10 and the holder 20 are configured along the same axis, and the arbor assembly 10 is combinable detachably with the holder 20. The arbor assembly 10 comprises a collar 11, a shank part 12, a movable member 13 and at least one drive pin 14. The collar 11 comprises at least one aperture 111 and a combination portion 112 combinable with the holder 20. The aperture 111 is insertable by the drive pin 14 for position. In this embodiment, the two apertures 111 are located symmetrically at a periphery of the combination portion 112, and each aperture 111 passes through two opposite surfaces of the collar 11. In this embodiment, the aperture 111 is a circular hole, but the aperture 111 may be a rectangular hole, a polygonal hole or other geometric hole. In addition, the combination portion 112 may be configured as a recess structure of the collar 11, but this disclosure is not limited thereto. For example, the structure of the combination portion 112 may be changed according to a corresponding combination structure of the holder 20.

The shank part 12 is connected with an opposite side of the collar 11 disposed the combination portion 112. The shank part 12 and the collar 11 are arranged along the same axis, and a cross-sectional area of the shank part 12 is smaller than a cross-sectional area of the collar 11. In this embodiment, two symmetrical planar structures 126 are formed at a part of an outer surface of the shank part 12, such that an outer contour of a cross-section of the shank part 12 is a non-circular contour. The two symmetrical planar structures 126 may serve as the positions to be held by hand tools, such as a wrench or the like, to enable easy clamping during assembly or disassembly, but the structure of the shank part 12 is not limited thereto.

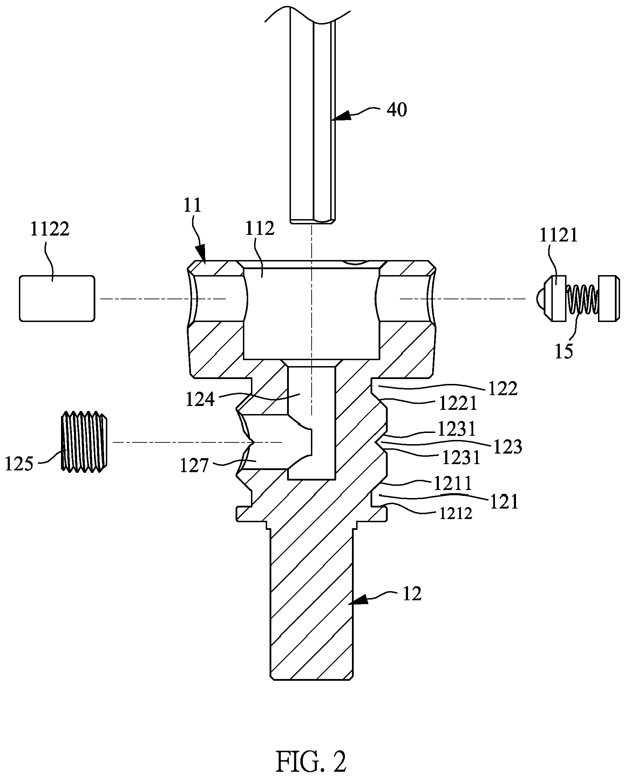

Refer to FIG. 1 and FIG. 2. As illustrated in FIG. 1 and FIG. 2, the shank part 12 comprises a first positioning groove 121 and a second positioning groove 122. The first positioning groove 121 and the second positioning groove 122 are configured on the outer surface of the shank part 12 to position the movable member 13 corresponding to the movement of the movable member 13. The first positioning groove 121 is on the non-circular outer contour of the shank part 12 and away from the collar 11, and the second positioning groove 122 is on the non-circular outer contour of the shank part 12 and adjacent to the collar 11. In one embodiment of this disclosure, the first positioning groove 121 comprises a first bevel 1211 and a stopping plane 1212. The first bevel 1211 is at one side of the first positioning groove 121 adjacent to the collar 11, and the stopping plane 1212 is at another side of the first positioning groove 121 away from the collar 11. The first level 1211 is used for assisting the movable member 13 in moving toward the collar 11 easily, and the stopping plane 1212 is used for limiting the movable member 13 from move away further from the collar 11. The second positioning groove 122 comprises a second bevel 1221, and the second bevel 1221 is at one side of the second positioning groove 122 away from the collar 11. The second bevel 1221 is used for assisting the movable member 13 in moving away from the collar 11 easily.

In one embodiment of this disclosure, the shank part 12 further comprises a third positioning groove 123. The third positioning groove 123 is configured on the outer surface of the shank part 12 to position the movable member 13 corresponding to the movement of the movable member 13. The third positioning groove 123 is on the non-circular outer contour of the shank part 12 and between the first positioning groove 121 and the second positioning groove 122. In one embodiment of this disclosure, the third positioning groove 123 comprises two symmetrical third bevels 1231. One of the two symmetrical third bevels 1231 is at one side of the third positioning groove 123 adjacent to the collar 11, and the other of the two symmetrical third bevels 1231 is at another side of the third positioning groove 123 away from the collar 11. The third bevels 1221 is used for assisting the movable member 13 in moving towards the first positioning groove 121 or the second positioning groove 122 easily.

The movable member 13 is sleeved on the shank part 12 and is movable along the axis between the first positioning groove 121 and the second positioning groove 122 relative to the shank part 12. The movable member 13 comprises a sleeving hole 131 for sleeving the movable member 13 on the shank part 12, and the shape of the sleeving hole 131 is corresponding to the outer contour of a cross-section of the shank part 12. In this embodiment, the sleeving hole 131 is a non-circular hole corresponding to the outer contour of the cross-section of the shank part 12. The movable member 13 is limited to only move along the axis of the shank part 12 and does not rotate based on the axis relative to the shank part 12.

In one embodiment of this disclosure, the movable member 13 further comprises a resilient member 132 disposed at one side of the movable member 13 in contact with the shank part 12, such that the movable member 13 is engaged with the resilient member 132 when the movable member 13 moves to one of the first positioning groove 121, the second positioning groove 122 and the third positioning groove 123. In this embodiment, the resilient member 132 is a positioning structure which combines a ball with a spring, but this disclosure is not limited thereto. For example, the resilient member 132 may also be a one-piece pin-like member made of resilient or elastic plastic material.

For example, when the movable member 13 moves to the first positioning groove 121, the movable member 13 may be positioned by engaging the resilient member 132 with the first positioning groove 121. At this moment, if the movable member 13 is forced away from the collar 11, the resilient member 132 is limited by the stopping plane to stop. If the movable member 13 is forced to move towards the collar 11, the resilient member 132 moves, in a compressed and deformed manner, along the first level 1211 towards the collar 11. Similarly, when the movable member 13 moves to the second positioning groove 122, the movable member 13 may be positioned by engaging the resilient member 132 with the second positioning groove 122. At this moment, if the movable member 13 is forced away from the collar 11, the resilient member 132 moves, in a compressed and deformed manner, along the second level 1221 away from the collar 11. If the movable member 13 is forced towards the collar 11, the resilient member 132 is limited by the collar 11 to stop. Further, when the movable member 13 moves to the third positioning groove 123, the movable member 13 may be positioned by engaging the resilient member 132 with the third positioning groove 123. At this moment, no matter whether the movable member 13 is forced away from the collar 11 or towards the collar 11, the resilient member 132 moves, in a compressed and deformed manner, along the third level 1231 towards the first positioning groove 121 or the second positioning groove 122.

As illustrated in FIG. 1 and FIG. 2, in one embodiment of this disclosure, the combination portion 112 comprises at least one positioning pin protruded from a lateral wall of the recess. The combination portion 112 is combined with the holder 20 by the at least one positioning pin. In this embodiment, the collar 11 further comprises at least one elastic member 15, and the combination portion 112 comprises a first positioning pin 1121 and a second positioning pin 1122. The elastic member 15 is arranged corresponding to the first positioning pin 1121 to form an elastic positioning structure, and the second positioning pin 1122 is a single columnar structure, but this disclosure is not limited thereto. For example, the first positioning pin 1121 and the second positioning pin 1122 are the single columnar structures or the elastic positioning structures.

In one embodiment of this disclosure, the shank part 12 further comprises an insertion space 124. The insertion space 124 may be configured as a recess extended along the axis towards the shank part 12 in the combination portion 112. The insertion space 124 is communication with the combination portion 112, and a diameter of the insertion space 124 is not less than a diameter of a drill bit 40, such that the drill bit 40 is insertable into the insertion space 124. Besides, the shank part 12 further comprises a fastener 125. The fastener 125 is disposed in an adjustment space 127 which is communicated with the insertion space 124 and is perpendicular to the axis. The drill bit 40 inserted into the insertion space 124 is capable of being fastening or unfastening by adjusting the fastener 125.

One end of the drive pin 14 is connected with the movable member 13 and the other end of the drive pin 14 is inserted into at least a part of the aperture 111. The drive pin 14 moves with the movement of the movable member 13, such that a location of the drive pin 14 relative to the aperture 111 of the collar 11 is changed. For example, the drive pin 14 is only inserted into a part of the aperture 111, through the aperture 111 or beyond the aperture 111. In this embodiment, the drive pin 14 is a column corresponding to the aperture 111 which is the circular hole, but the drive pin 14 may be a rectangular pillar, a polygonal pillar or other geometric pillar according to the different shape of the aperture 111.

Refer to FIG. 1 to FIG. 3. As illustrated in FIG. 1 to FIG. 3, the holder 20 comprises a base 21 and a corresponding combination portion 22. The base 21 comprises a first surface 211, a second surface 212 opposite to the first surface 211, and at least one through hole 213. The first surface 211 faces the collar 11 of the arbor assembly 10 to combine with each other, and the second surface 212 faces the saw blade 30 to connect to each other. The through hole 213 is insertable by the drive pin 14 for position. In this embodiment, the two through holes 213 are located symmetrically at a periphery of the corresponding combination portion 22, and each through hole 213 passes through the first face 211 and the second face 212 of the base 21. In this embodiment, the through hole 213 is a circular hole, but the through hole 213 may be a rectangular hole, a polygonal hole or other geometric hole.

The corresponding combination portion 22 is configured on the first surface 211 for forming a detachable engagement structure with the combination portion 112 of the collar 11. In this embodiment, the corresponding combination portion 22 is a columnar structure protruded from the first surface 211 of the base 21 so as to correspond to the combination portion 112 formed with the recess, but this disclosure is not limited thereto. The corresponding combination portion 22 comprises at least one slidable positioning groove 221 configured on an outer wall of the columnar structure. Each positioning pin 1121 slides into each slidable positioning groove 221 so as to combine the combination portion 112 and the corresponding combination portion 22.

The slidable positioning groove 221 comprises a first section 221a and a second section 221b. The first section 221a is a straight groove, and the second section 221b is an annular groove along an outer wall of the columnar structure. One end of the first section 221a is an open end 2211 from which the positioning pin 1121 or 1122 enters or is removed, the other end of the first section 221a is communicated with one end of the second section 221b, and the other end of the second section 221b is a closed end 2212. In one embodiment of this disclosure, the first section 221a is substantially perpendicular to the first surface 211, and the second section 221b is substantially parallel to the first surface 211. Besides, the slidable positioning groove 221 further comprises at least one engagement recess 2213. The at least one engagement recess 2213 is configured at an intersection of the first section 221a and the second section 221b or/and the closed end 2212 of the second section 221b. The engagement recess 2213 is engageable with the positioning pin 1121 or 1122.

In one embodiment of this disclosure, two symmetrical planar structures 222 are formed at the outer wall of the columnar structure (i.e. the corresponding combination portion 22), such that an outer contour of a cross-section of the columnar structure is a non-circular contour. The two symmetrical planar structures 222 are also used as points of application of a tool, such as a wrench or the like, but the structure of the corresponding combination portion 22 is not limited thereto.

The holder 20 further comprises a screw thread 23 formed on the second surface 212 for screwing the saw blade 30. In one embodiment of this disclosure, the holder 20 further comprises an elastic ring 24 sleeved on the screw thread 23 for damping or regulating connection between the holder 20 and the saw blade 30 when the saw blade 30 is screwed on the screw thread 23. The elastic ring 24 is made of resilient plastic materials, but this disclosure is not limited thereto. Besides, the holder 20 further comprises a central passage 25. The central passage 25 passes through the holder 20 along the axis from the corresponding combination portion 22 disposed on the first surface 211 of the holder 20 to the screw thread 23 disposed on the second surface 212 of the holder 20. The central passage 25 is passable by the drill bit 40.

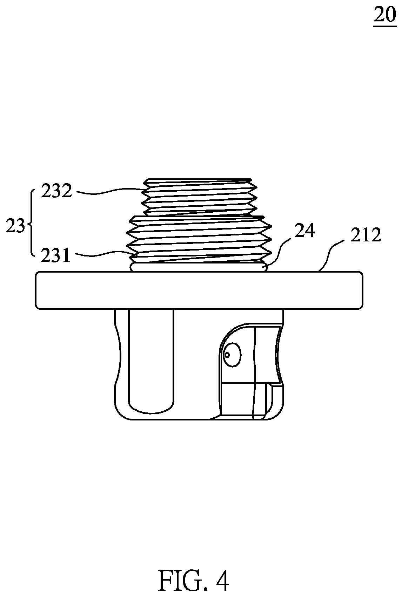

Refer to FIG. 4. As illustrated in FIG. 4, in one embodiment of this disclosure, the screw thread 23 of the holder 20 comprises a first thread section 231 and a second thread section 232. Two sides of the first thread section 231 are connected to the second surface 212 and the second thread section 232 respectively, and a diameter of the second thread section 232 is less than a diameter of the first thread section 231. The elastic ring 24 is sleeved at the connection of the first thread section 231 and the second surface 212. Accordingly, the screw thread 23 is connectable to the different saw blades with different sizes via the first thread section 231 and the second thread section 232 for increasing the applicability and convenience of component replacement of the hole saw component of this disclosure.

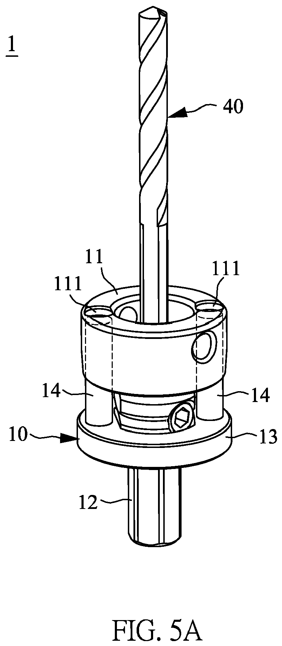

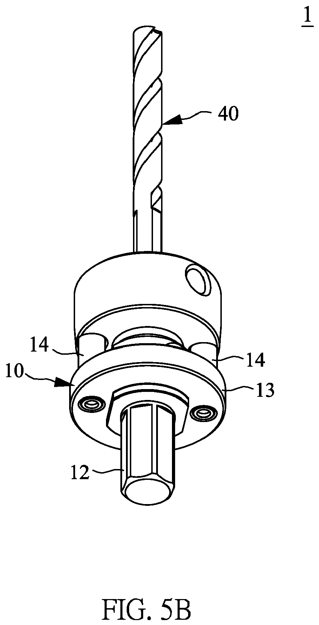

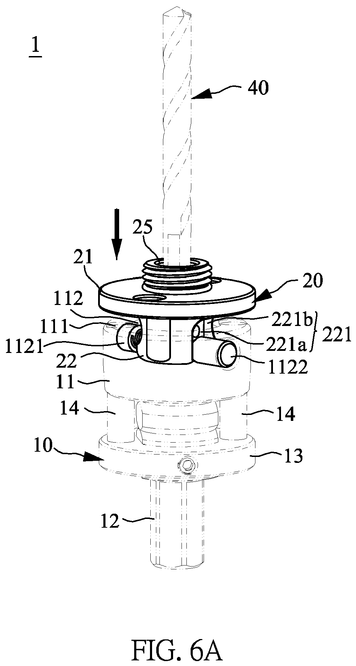

The below description represents a structural corresponding relationship of the arbor assembly 10 and the holder 20 for different using statuses according to one embodiment of the hole saw component 1 of this disclosure. Refer to FIGs. 5A-5B and FIGs. 6A-6C. In order to explain conveniently a combinable operation of the combination portion 112 of the arbor assembly 10 and the corresponding combination portion 22 of the holder 20 of the hole saw component 1 of this disclosure, the collar 11 in FIGs. 6A-6B only shows the positioning pin of the combination portion 112 (other structures are shown transparently as dot-dash lines) to perform the combinable operation corresponding to the slidable positioning groove 221 of the corresponding combination portion 22.

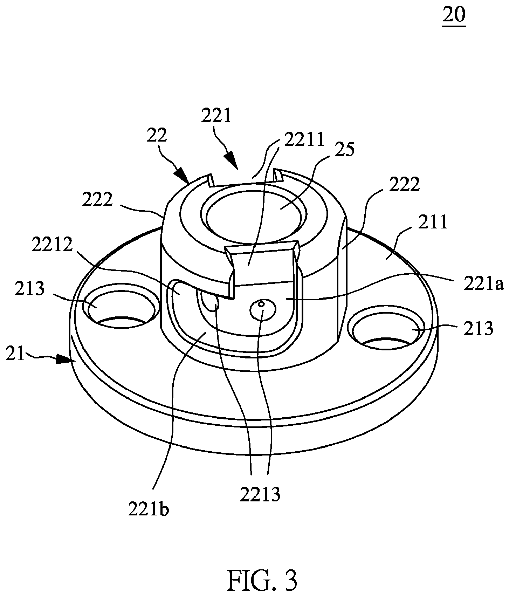

As illustrated in FIGs. 5A-5B, in this embodiment, the drill bit 40 is inserted into the arbor assembly 10 in first. When the movable member 13 is at the first positioning groove 121 relative to the shank part 12 (see FIGs. 1-2), the drive pin 14 is inserted into and not through the aperture 111 of the collar 11, such that the combination of the arbor assembly 10 and the holder is not influenced by the drive pin 14. As illustrated in FIG. 3 and FIG. 6A, the corresponding combination portion 22 of the holder 20 is aligned with the combination portion 112 of the collar 11 of the arbor assembly 10 when the arbor assembly 10 is shown as FIGs. 5A-5B. The holder 20 is moved straight towards the arbor assembly 10, such that the drill bit 40 passes through the central passage 25 of the holder 20. When the corresponding combination portion 22 of the holder 20 is close to the combination portion 112 of the collar 11 of the arbor assembly 10, the positioning pins 1121 and 1122 protruded from the inner wall of the combination portion 112 slide into the first sections 221a of the slidable positioning grooves 221 through the open ends 2211, and then move to the intersection of the first section 221a and the second section 221b along the axis. At this moment, the positioning pins 1121 and 1122 are engaged with the engagement recesses 2213 at the intersection of the first section 221a and the second section 221b.

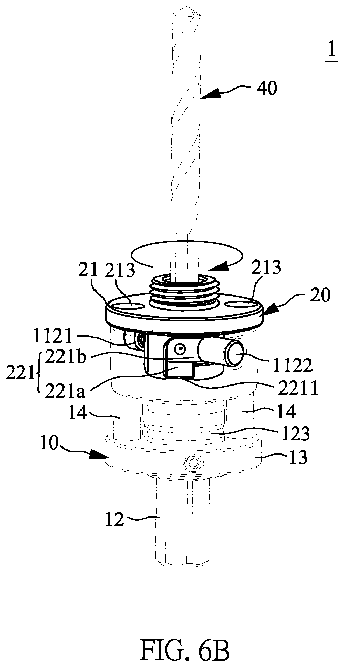

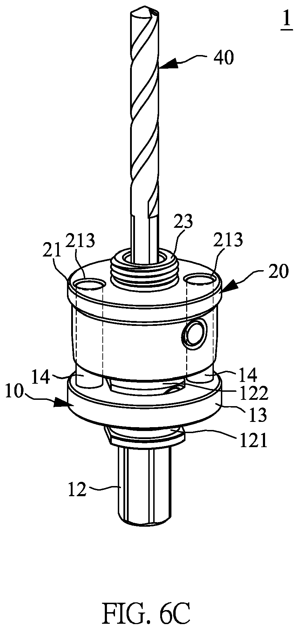

Then the holder 20 is rotated, for example in a clockwise manner as illustrated in FIG. 6A, based on the axis relative to the arbor assembly 10, such that the positioning pins 1121 and 1122 slide into the second sections 221b of the slidable positioning grooves 221 and are stopped at the closed ends 2212 of the second sections 221b. At this moment, the positioning pins 1121 and 1122 are engaged with the engagement recesses 2213 at the closed ends 2212, as shown in FIG. 6B, and the aperture 111 of the collar 11 of the arbor assembly 10 is aligned with the through hole 213 of the base 21 of the holder 20. Therefore, the holder 20 and the arbor assembly 10 are combined with each other by the detachable engagement structure formed by the corresponding combination portion 22 and with the combination portion. Finally, the movable member 13 shown in FIG. 6B is moved to the third positioning groove 123 relative to the shank part 12. At this moment, the drive pin 14 is through the aperture of the collar 11 and is further inserted into the through hole 213 of the base 21 of the holder 20 (but the drive pin 14 is not through the through hole 213), such that the arbor assembly 10 and the holder 20 are combined with each other and the rotation of the holder 20 relative to the arbor assembly 10 is limited, as shown in FIG. 6C. Since the drive pin 14 is not through the through hole 213, the screw thread 23 of the holder 20 is connectable with or separable from the saw blade freely without the interference of the drive pin 14.

Conversely, if the holder 20 would be separated from the arbor assembly 10, a reversal operation may be performed as shown from FIG.6C to FIG.6A. The movable member 13 shown in FIG. 6C is moved from the third positioning groove 123 to the first positioning groove 121 relative to the shank part 12 so as to release the limitation of the rotation of the holder 20 by the drive pin 14. Then the holder 20 is rotated reversely, for example in a counterclockwise manner as illustrated in FIG. 6B, based on the axis relative to the arbor assembly 10, such that the positioning pins 1121 and 1122 move from the closed ends 2212 of the second sections 221b to the intersection of the first section 221a and the second section 221b, and slide out the slidable positioning grooves 221 through the open end 2211 along the axis. Therefore, the combination portion 112 of the arbor assembly 10 is separated from the corresponding combination portion 22 of the holder 20.

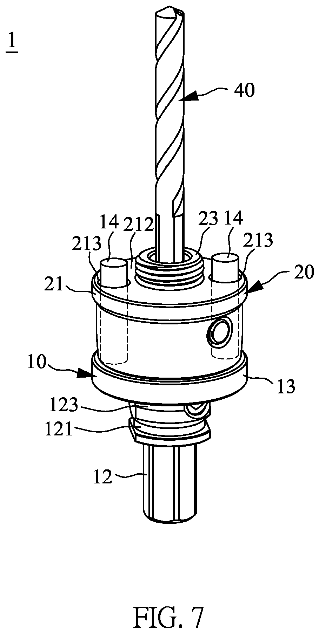

Refer to FIG. 6C and FIG. 7. In this embodiment, when the movable member 13 shown in FIG. 6C is moved from the third positioning groove 123 (see FIG. 7) to the second positioning groove 122 (see FIG. 6C), as illustrated in FIG. 7, the drive pin 14 is through the through hole 213 of the base 21 and beyond the second surface 212. At this moment, the arbor assembly 10 and the holder 20 are still combined with each other and the rotation of the holder 20 relative to the arbor assembly 10 is limited. so as to release the limitation of the rotation of the holder 20 by the drive pin 14. When the saw blade is connected with the screw thread 23 of the holder 20, the rotation of the saw blade relative to the holder 20 is limited by the drive pin 14 beyond the second surface 212 so as to prevent the saw blade to be separated from the holder 20. When the saw blade is not connected with the screw thread 23 of the holder 20, the connection of the saw blade and the holder 20 is limited by the drive pin 14 beyond the second surface 212.

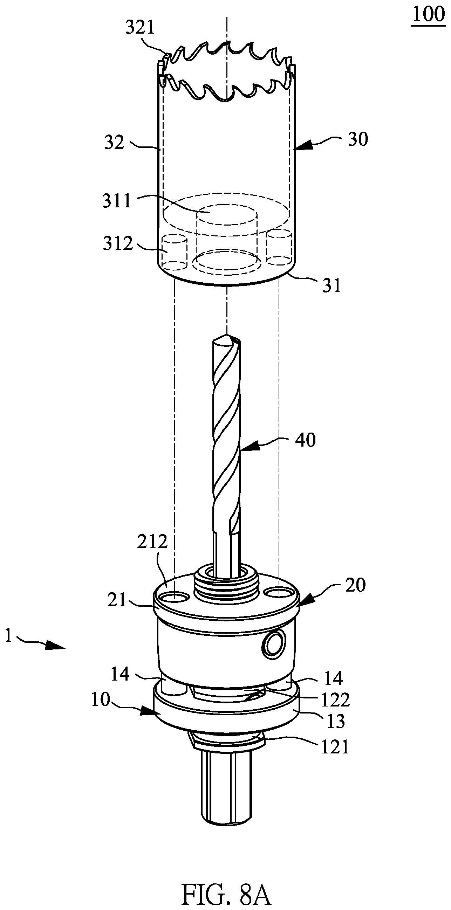

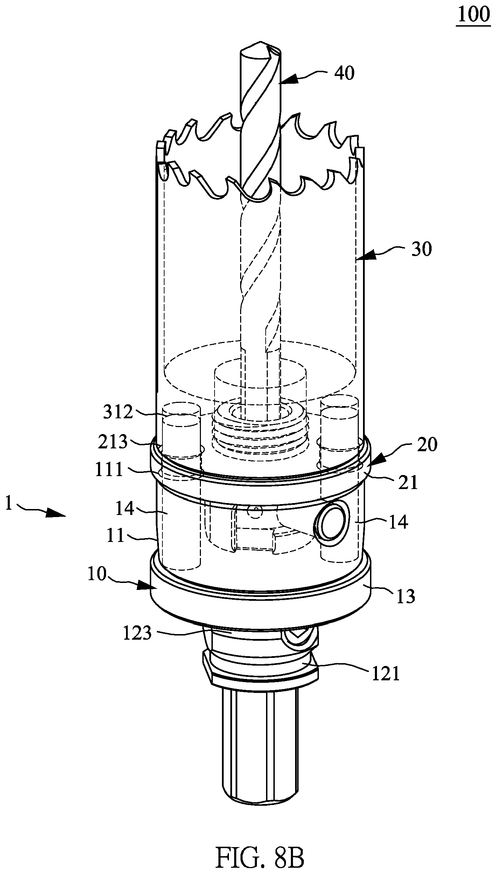

Refer to FIG. 1 and FIGs. 8A-8B. As illustrated in FIG. 1 and FIGs. 8A-8B, the hole saw 100 of this disclosure comprises the aforesaid hole saw component 1 and a saw blade 30. The saw blade 30 is detachably connected to the second surface 212 of the base 21. The saw blade 30 comprises a back section 31 and a lateral section 32. The back section 31 comprises an axial hole 311 and at least one opening 312. The axial hole 311 is passable by the drill bit 40, and the opening 312 is insertable by the drive pin 14. In this embodiment, the opening 312 is a circular hole corresponding to the shape of the drive pin 14, but the opening 312 may be a rectangular hole, a polygonal hole or other geometric hole. The lateral section 32 is connected to the back section 31. One side of the lateral section 32 of the saw blade 30 opposite to the lateral section 32 connected to the back section 31 comprises serrated teeth 321 for sawing an object.

The hole saw 100 further comprises a drill bit 40. The drill bit 40 is combined with the arbor assembly 10 of the hole saw component 1, and the drill bit 40 passes through the central passage 25 of the holder 20 and the axial hole 311 of the saw blade 30. In one embodiment of this disclosure, a diameter of the axial hole 311 is greater than a diameter of the drill bit 40. Accordingly, when any residual fragment of the object formed by sawing the object is retained in the saw blade 30, the drill bit 40 is diagonally passed through the axial hole 311 of the saw blade 30 to remove the fragments of the object from the saw blade 30.

For using the hole saw 100 of this disclosure, when the movable member 13 of the arbor assembly 10 is at the second positioning groove 122, the drive pin 14 is inserted into the aperture 111 of the collar 11 of the arbor assembly 10, the through hole 213 of the base 21 of the holder 20 and the opening 312 of the saw blade 30, such that the arbor assembly 10, the holder 20 and the saw blade 30 are combined with each other, and the rotation of the arbor assembly 10, the holder 20 or the saw blade 30 is limited. Therefore, it is more stable for sawing by the hole saw 100 of this disclosure. When the movable member 13 is at the third positioning groove 123, the drive pin 14 is inserted into the aperture 111 of the collar 11 of the arbor assembly 10 and the through hole 213 of the base 21 of the holder 20, such that the arbor assembly 10 and the holder 20 are combined with each other, and the rotation of the saw blade 30 is not limited. At this moment, the saw blade 30 is individually separable from or connectable with the holder 20. When the movable member 13 is at the first positioning groove 121, the drive pin 14 is only inserted into the aperture 111 of the collar 11 of the arbor assembly 10, and the rotation of the holder 20 and the saw blade 30 is not limited, such that the combination portion of the arbor assembly 10 is separable from the corresponding combination portion of the holder 20.

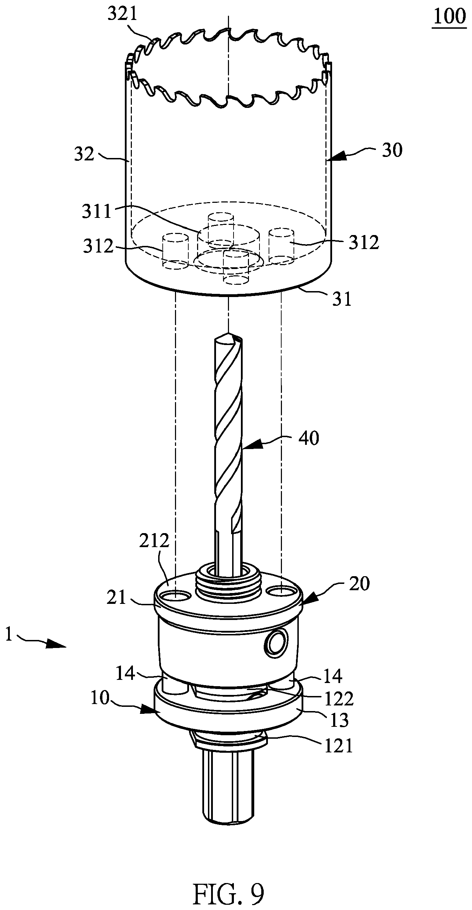

In addition, refer to FIG. 9, which illustrates another embodiment of the hole saw 100 of this disclosure, wherein the saw blades 30 of different sizes may be replaced for different needs. In this embodiment, the saw blade 30 comprises four openings 312. Each two openings 312 are disposed symmetrically relative to the axial hole 311 as a set, and an angle between the two adjacent openings 312 based on the axial hole 311 is 90 degrees. Therefore, the drive pin 14 is insertable into the corresponding openings 312 by rotating the saw blade 30 up to 90 degrees relative to the holder 20.

In summary, the hole saw component 1 and the hole saw 100 comprising the aforesaid hole saw component 1 of this disclosure provides positioning effect for different parts by moving the movable member 13 to different positions relative to the shank part 12. Accordingly, the convenience of assembly, disassembly or replacement of the components may be improved, and the costs of the sawing operations may be reduced.

The above detailed description is merely illustrative in nature and is not intended to limit the embodiments of the subject matter or the application and uses of such embodiments. Moreover, while at least one exemplary embodiment has been presented in the foregoing detailed description, it should be appreciated that a vast number of variations exist. It should also be appreciated that the exemplary one or more embodiments described herein are not intended to limit the scope, applicability, or configuration of the claimed subject matter in any way. Rather, the foregoing detailed description will provide those skilled in the art with a convenient guide for implementing the described one or more embodiments. Also, various changes can be made in the function and arrangement of elements without departing from the scope defined by the claims, which include known equivalents and foreseeable equivalents at the time of filing this patent application.

## Claims

1. A hole saw component (1) combinable with a saw blade (30) detachably, comprising:
an arbor assembly (10), comprising a collar (11), a shank part (12), a movable member (13) and at least one drive pin (14), the collar (11) comprising at least one aperture (111) and a combination portion (112), the aperture (111) being located at a periphery of the combination portion (112), **characterized by** the shank part (12) being connected with the collar (11) and comprising a first positioning groove (121) and a second positioning groove (122), the movable member (13) being sleeved on the shank part (12) and being movable between the first positioning groove (121) and the second positioning groove (122) relative to the shank part (12), and the drive pin (14) being connected with the movable member (13) and inserted into at least a part of the aperture (111); and
a holder (20), comprising a base (21) and a corresponding combination portion (22), the base (21) comprising a first surface (211), a second surface (212) opposite to the first surface (211), and at least one through hole (213), the corresponding combination portion (22) being configured on the first surface (211) for forming a detachable engagement structure with the combination portion (112), the through hole (213) being insertable by the drive pin (14), and the second surface (212) being connectable with the saw blade (30);
wherein when the movable member (13) is at the first positioning groove (121), the drive pin (14) is inserted into and not through the aperture (111), such that the combination portion (112) of the arbor assembly (10) is separable from the corresponding combination portion (22) of the holder (20); and wherein when the movable member (13) is at the second positioning groove (122), the drive pin (14) is inserted through the aperture (111) and the through hole (213) and beyond the second surface (212), such that the arbor assembly (10) is combinable with the holder (20).

2. The hole saw component (1) of claim 1, wherein the combination portion (112) is a recess and the corresponding combination portion (22) is a columnar structure, the combination portion (112) comprising at least one positioning pin (1121, 1122) protruded from a lateral wall of the recess, the corresponding combination portion (22) comprising at least one slidable positioning groove (221) configured on an outer wall of the columnar structure, such that the combination portion (112) and the corresponding combination portion (22) are combined with each other when each positioning pin (1121, 1122) slides into each slidable positioning groove (221).

3. The hole saw component (1) of claim 2, wherein the slidable positioning groove (221) comprises a first section (221a) and a second section (221b), one end of the first section (221a) is an open end (2211) from which the positioning pin (1121, 1122) enters or is removed, the other end of the first section (221a) is communicated with one end of the second section (221b), and the other end of the second section (221b) is a closed end (2212).

4. The hole saw component (1) of claim 3, wherein the first section (221a) is substantially perpendicular to the first surface (211), and the second section (221b) is substantially parallel to the first surface (211).

5. The hole saw component (1) of claim 2, wherein the slidable positioning groove (221) comprises at least one engagement recess (2213) engageable with the positioning pin (1121, 1122).

6. The hole saw component (1) of claim 2, wherein two symmetrical planar structures (222) are formed at the outer wall of the columnar structure.

7. The hole saw component (1) of claim 1, wherein the movable member (13) further comprises a sleeving hole (131) for sleeving the movable member (13) on the shank part (12), and the sleeving hole (131) is a non-circular hole corresponding to an outer contour of a cross-section of the shank part (12).

8. The hole saw component (1) of claim 1, wherein the shank part (12) further comprises a third positioning groove (123) configured between the first positioning groove (121) and the second positioning groove (122), and wherein when the movable member (13) is at the third positioning groove (123), the drive pin (14) is inserted through the aperture (111) and into but not through the through hole (213) so as to combine the arbor assembly (10) with the holder (20), and the holder (20) is connectable with or separable from the saw blade (30).

9. The hole saw component (1) of claim 8, wherein the first positioning groove (121) comprises a first bevel (1211) and a stopping plane (1212), and the movable member (13) is limited by the stopping plane (1212) to move only along the first bevel (1211) toward the collar (11); wherein the second positioning groove (122) comprises a second bevel (1221), and the movable member (13) is limited by the collar (11) to move only along the second bevel (1221) away from the collar (11); and wherein the third positioning groove (123) comprises two symmetrical third bevels (1231), and the movable member (13) is movable along each third bevel (1231) to the first positioning groove (121) or the second positioning groove (122).

10. The hole saw component (1) of claim 8, wherein the movable member (13) comprises a resilient member (132) disposed at one side of the movable member (13) in contact with the shank part (12), such that the movable member (13) is engaged with the resilient member (132) when the movable member (13) moves to one of the first positioning groove (121), the second positioning groove (122) and the third positioning groove (123).

11. The hole saw component (1) of claim 1, wherein the shank part (12) further comprises an insertion space (124) for inserting a drill bit (40) and a fastener (125) for fastening or unfastening the drill bit (40) inserted into the insertion space (124).

12. The hole saw component (1) of claim 1, wherein the holder (20) further comprises a screw thread (23) formed on the second surface (212) for screwing the saw blade (30).

13. The hole saw component (1) of claim 12, wherein the screw thread (23) comprises a first thread section (231) and a second thread section (232), two sides of the first thread section (231) are connected to the second surface (212) and the second thread section (232) respectively, and a diameter of the second thread section (232) is less than a diameter of the first thread section (231).

14. A hole saw (100), **characterized by** comprising:
the hole saw component (1) as recited in any one of claims 1 to 13; and
a saw blade (30) detachably connected to the second surface (212) of the base (21), the saw blade (30) comprising a back section (31) and a lateral section (32) connected to the back section (31), the back section (31) comprising an axial hole (311) and at least one opening (312), the opening (312) being insertable by the drive pin (14), and the lateral section (32) comprising serrated teeth (321);
wherein when the movable member (13) is at the second positioning groove (122), the drive pin (14) is inserted into the aperture (111), the through hole (213) and the opening (312), such that the arbor assembly (10), the holder (20) and the saw blade (30) are combined with each other.

15. The hole saw (100) of claim 14, further comprising a drill bit (40) combined with the hole saw component (1) and passing through the axial hole (311) of the saw blade (30), wherein a diameter of the axial hole (311) is greater than a diameter of the drill bit (40).
